# EUROPEAN PATENT SPECIFICATION

(11) **EP 3 563 015 B1**
(45) Date of publication and mention of the grant of the patent: **02.08.2023**
(21) Application number: 17825742.4
(22) Date of filing: 28.12.2017
(51) Int. Cl.: E04D 13/03, E06B 3/54, E06B 3/66

(54) **A PANE MODULE ADAPTED TO BE INSTALLED ON A WINDOW FRAME AND A METHOD FOR MAKING A PANE MODULE**
ZUR INSTALLATION AN EINEN FENSTERRAHMEN ANGEPASSTES SCHEIBENMODUL UND VERFAHREN ZUR HERSTELLUNG EINES SCHEIBENMODULS
MODULE DE VITRE CONÇU POUR ÊTRE INSTALLÉ SUR UN CADRE DE FENÊTRE ET PROCÉDÉ DE FABRICATION DE MODULE DE VITRE

(30) Priority: 29.12.2016 DK PA201671063
(43) Date of publication of application: 06.11.2019
(73) Proprietor: VKR Holding A/S, 2970 Hørsholm (DK)
(72) Inventor: NIELSEN, Kristian Ørnsvig, 8783 Hornsyld (DK)
(74) Representative: AWA Denmark A/S
(86) International application number: PCT/DK2017/050455
(87) International publication number: WO 2018/121830

(56) References cited:
- WO-A1-2007/057029
- WO-A1-2010/088904
- CH-A5- 560 309
- DE-A1- 19 947 601

## Description

The present invention relates to a pane module adapted to be installed on a window frame and comprising a pane element and a border element, where the pane element includes at least two sheet elements, such as sheets of glass, separated by one or more spacer members, where the pane element has an exterior intended to face the exterior of a building in a mounted state, an interior side intended to face the interior of a building in a mounted state, and outer sides extending between the exterior side and the interior side and delimiting a pane area, where the border element surrounds the pane element, extending along at least some of its outer sides, and where the border element is made by moulding and attached to the pane element during the moulding process. The invention further relates to a method for making a pane module.

A pane module of this type, which is known from WO2010/088904, allows a greater flexibility in the production windows as the moulded border element eliminates the need for glazing lists and provides a continuous support along the entire edge of the pane element, thereby allowing a much higher degree of freedom in designing the sash and/or frame members. Certain functions previously associated with the sash and/or frame members, such as load bearing, may be wholly or partially taken over by the border element and a great variety of window products may be achieved by combining different pane modules and different sash and/or frame members in different ways.

It has, however, been discovered that the known pane modules are not equally well suited for use with all types of panes. Particularly, it has been seen that vacuum insulated glass unit, also known as vacuum panes, where there is a vacuum in the space between the sheet elements, tend to fail when used in such pane modules and exposed to harsh climate conditions.

Another pane module where the border element is made from sheet metal and where a moulded thermal insulating element is arranged to extend along at least some of the outer sides of the pane element is known from CH560309A5. This pane module provides a good protection of the pane edges, but the choice of insulating material for the insulating element is very limited due to the insulating element not being very well protected and needing to have sufficient load-bearing properties.

It is therefore the object of the invention to provide a pane module, which provides better lifetime for vacuum panes and other delicate pane elements, such as triple glazed panes, and which is also usable in a wider range of climate zones.

This is achieved with a pane module according to claim 1.

It has been discovered that a relatively large percentage of the pane failures results from tensions at the edges of the pane elements at or close to spacer members, which interconnects the sheet elements and keeps the space between them sealed air tight. Such tensions occur when there is a large temperature coefficient across the thickness of the pane, i.e. when the temperature at the interior side of the pane element is much higher than the temperature at the exterior side or vice versa. The temperature gradient between inner sheet and outer sheet causes the sheets to expand with different rates. This introduces stress in the edges and also reduces the lifetime of the pane module. Providing thermal insulation along edges of the pane element, locally reduces the thermal coefficient at these edges, and by encasing the thermal insulating element in the border element, the insulating element is not only well-protected but also located close to the pane element. Arranging the thermal insulating element so that it covers the spacer member when seen perpendicular to the interior and/or exterior side of the pane element has been found to provide a considerable reduction in pane failure in addition to at least partially hiding the spacer member from view.

It is even possible to arrange the thermal insulating element in direct contact with the pane element, thereby providing a particularly good thermal contact between the pane element and the thermal insulating material of the insulating element. In this context "direct contact" is intended to mean that no other members, such as sealing strips, fire-retarding strips, glazing lists, rigid profiles, or the like, are inserted between the thermal insulating element and the pane element. It does not, however, exclude attaching the thermal insulating element to the pane element by means of a thin layer of glue or adhesive, or the presence of a masking on the pane element intended for example to promote adhesion or hide the thermal insulating element from view when seen from the interior side.

In the following, reference will be made simply to "insulating element" and it is to be understood that the term "insulating" is intended as a reference to thermal insulation. This, however, does not exclude that the insulating element may also provide for example sound insulation in addition to the thermal insulation. Similar considerations apply to other features including the term "insulating" in their name.

The reference to the border element surrounding the pane element is not intended to mean that the border element has to be in direct contact with the pane element at both the interior, the exterior and the outer sides. Nor does it mean that the border element has to extend along all edges of the pane element, i.e. the top, bottom, and side edges of a rectangular pane element in the mounted state. It is simply intended to mean that the border element is embodied so that pane element in fixated in relation to the border element in the mounted state.

It will be understood that the wording "along outer sides" is not intended to mean that the insulating element can only be present opposite the outer sides of the pane element. It is intended to indicate that the insulating element extends along edges of the pane element in the vicinity of the outer sides.

The pane element may for example be a vacuum insulated glass unit with an evacuated cavity and comprising an array of pillars between the sheet element, and preferably a side seal of the vacuum insulated glass unit comprises rigid solder.

Depending on the type of pane, the design of the border element, the position of hinges etc. the thermal insulating element may be arranged only along for example side edges of the pane element or only along a top and a bottom edge of the pane element in the mounted state. It will, however, often be preferred that the thermal insulating element(s) extend along all outer sides of the pane element in order to protect the spacer member(s), which are usually provided along all outer sides of the pane element. In vacuum pane elements the spacer member(s) may comprise a rigid solder connection. It will, however, be understood that this does not mean that the insulation must be the same along all of the outer sides as will also be explained later.

In the following reference will be made primarily to embodiments according to the invention, where a separate thermal insulating member is provided at each side of the pane element.

When using several separate thermal insulating members, be it one at each side of the pane or in a different constellation, the thermal insulating members can be arranged at a distance from each other when seen in parallel to the exterior side of the pane. This allows the material of the border element to enter between the insulating members during the moulding of the border element and thus provide a strengthening and/or stiffening of the pane module, and may also contribute to a good distribution of the moulding material. The distance between the insulating members is preferably at least 2 mm when moulding the border element of a pane module intended for use in a typical roof window from polyurethane, but other dimensions may apply if using different materials or making a pane module for a different purpose.

A similar effect may be achieved by providing the thermal insulating element with one or more passages allowing the material used for moulding the border element to pass through them. The dimensions of these passage would be the same as described for the distances between thermal insulating members.

The thermal insulating element(s) can be made of many different materials, including thermoplastic materials, such as expanded polystyrene or foamed polyurethane, cork, and mineral wool. Such materials provide a thermal conductivity of less than 0.2 W/(m·K) and provide the disclosed advantages. It is only required that the thermal insulating properties are satisfactory and that the material or combination of materials chosen is compatible with the material used for the border element.

In use, the pane module may form part of a moveable sash, which is connected to a stationary frame via a set of hinges, thereby forming an openable window, such as for example a roof window for use in an inclined roof.

The parts of the insulating element extending along different sides of the pane element may be embodied differently depending on the intended use of the pane module. As an example it may be advantageous to provide extra insulation at parts of the pane module intended for being arranged at the bottom of a window, which is to be used in a cold climate, in order to reduce the formation of condensation on the pane element, either by providing more insulating material or by using a different insulating material. As another example it may be advantageous to interrupt the insulating material of the insulating element wholly or partially at one or more places along the top edge of a pane module or even leave it out altogether at the top in order to make room for ventilation openings.

In some embodiments, which are well suited for use in cold climates, the insulating element(s) is arranged at the exterior side of the pane element so that it cover(s) a part of the pane area. This contributes to keeping the temperature coefficient between the interior side of the pane element and the exterior side down in the winter time and hence not only reduces the risk of harmful tensions in the pane element but may also reduce heat loss in general. In other climate zones, or for pane modules intended for use in buildings with special requirement for the indoor temperature, it may be advantageous to provide the thermal insulating element at the interior side of the pane. In still further embodiments, the insulating element extends along the outer sides or spanning over two or more of the exterior side, the interior side, and the outer sides of the pane element.

The border element may also be provided with projections serving for example for positioning the pane module in relation to a window sash or frame, or as drainage guides. As an example, the border element may comprise at least one feather arranged to project towards the exterior in the mounted state, said feather preferably projecting substantially perpendicularly to the exterior side of the pane. If using such a pane module in an inclined roof window and providing such feathers along the sides of pane element extending in parallel with the slope of the roof, the feathers will prevent or at least hinder water from being pressed sideways off the pane element, for example under the influence of wind. Hence the feathers will guide the water down along the exterior side of the pane element, from where it will run onto the roof surface, and thus reduce the risk of water entering the roof construction along the sides of the window.

The pane module may further include one or more stiffening and/or connector elements, which is/are embedded in the moulded border element. Such elements, which may for example be made of metal, can serve to provide the border element with desired physical properties, such as for example bending stiffness, and/or be used for connecting the pane module to for example a window sash or frame. They may also serve as an additional security measure by being adapted for keeping the pane element in place in case the border element becomes damaged, for example during a fire.

As pane modules lend themselves to use in the manufacture of windows having standardized sizes, it may be advantageous that they too follow certain standards. As an example, it may be considered advantageous that the pane module has the same overall exterior size and thickness independent of the type of pane element used. So different pane elements and insulating elements may be used in the same window of standard size.

By installing a pane module as defined above in a window frame, which is provided with hinges, the pane element may be suspended in an openable manner. This may be achieved either by the border element being connected directly to the hinges or by the pane element being connected to the hinges through an intermediate sash.

The object of the invention is also achieved with a method for making a pane module adapted to be installed on a window frame according to claim 12.

By arranging the thermal insulating element on the pane element and then moulding the border element so that it is attached to the pane element and at the same time encasing the thermal insulating element, the pane module can be manufactured in a simple and cost effective manner.

It is, however, also possible to make the pane module according to the invention by moulding the border element with a hollow extending along the outer sides and interior and/or exterior side of the pane and then subsequently filling the hollow with an insulating material. This alternative method is particularly useful when wishing to use an insulating material, which is not dimensionally stable, such as loose beads of expanded polystyrene, and/or a material, which may suck up or react with the moulding material used for the formation of the border element.

A pane module according to the invention may include further elements in addition to those mentioned above, including further insulating elements, which are not encased in the border element.

In the following the invention will be described in more detail with reference to the drawing showing different embodiments of the invention, where
Fig. 1 is a schematic sketch of a pane module,
Fig. 2 shows a schematic sketch of a first embodiment in a cross-section along the line II-II in Fig. 1,
Fig. 3 shows a second embodiment in a cross-section along the line II-II in Fig. 1, but without a projecting connector element,
Fig. 4 shows a schematic sketch of a third embodiment in a cross-section along the line II-II in Fig. 1,
Fig. 5 shows a schematic sketch of a fourth embodiment in a cross-section along the line II-II in Fig. 1,
Fig. 6 shows a schematic sketch of a fifth embodiment in a cross-section along the line II-II in Fig. 1, but without an embedded connector element, and
Fig. 7 shows a schematic sketch in a cross-section along the plane VII in Fig. 1 showing only the lower right-hand corner of the pane module.

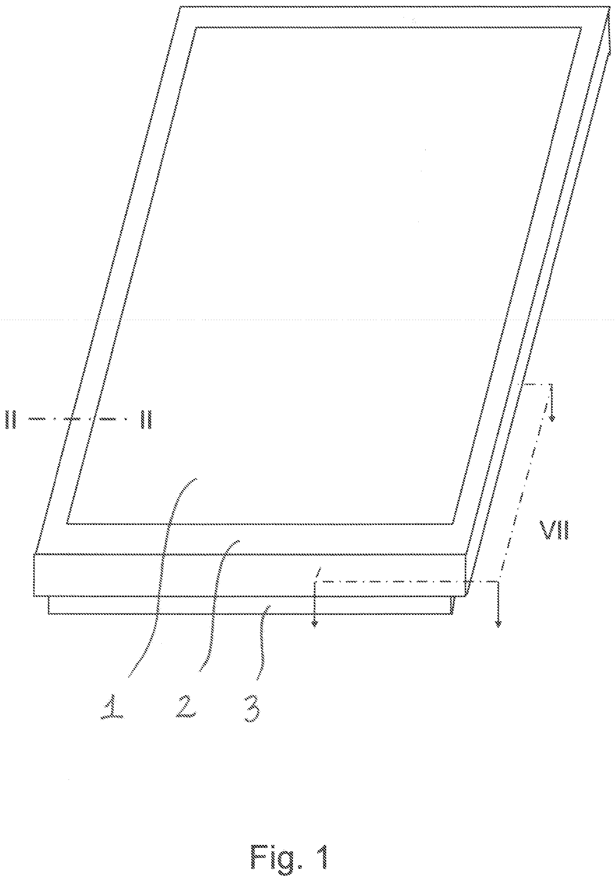

A pane module according to the invention is shown in Fig. 1. It comprises a pane element 1, a border element 2 and a stiffening and connector element 3, which is embedded in the moulded border element and adapted for use in connecting the pane module to another element (not shown), such as for example a window sash. Here the border element 2 surrounds the pane element 1 along all four sides of the pane element, defining a top, a bottom and two sides of the pane module, but it is within the scope of the invention to have the border element extending only along some sides, for example the top and side edges of the pane element.

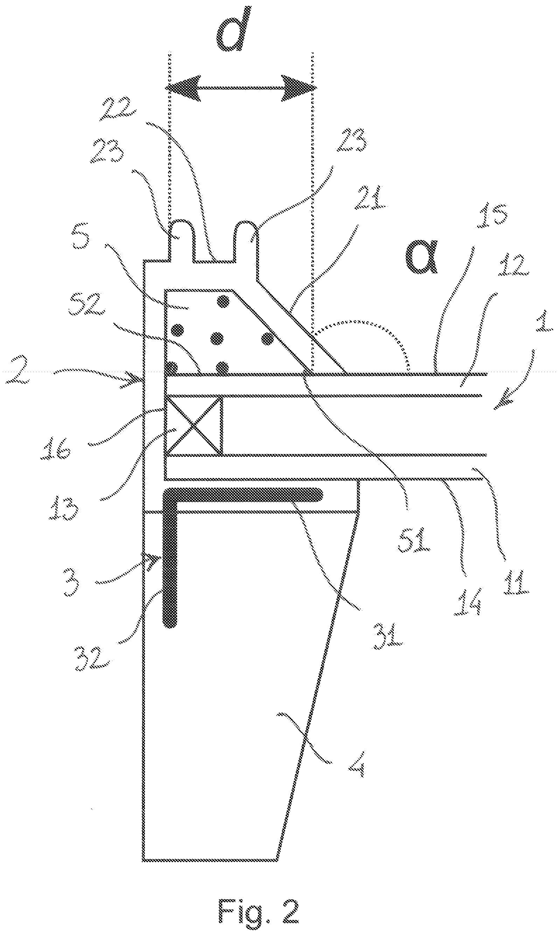

The pane element 1 includes an interior sheet element 11 and an exterior sheet element 12, which are separated by one or more spacer members 13 as shown in Fig. 2. The interior sheet element defines an interior side 14 intended to face the interior of a building in a mounted state and the exterior sheet element defines an exterior side 15 intended to face the exterior of a building in a mounted state. Outer sides 16 extend between the exterior side and the interior side and delimit a pane area. The outer sides also define two side edges, a top edge, and a bottom edge of the pane element when the pane element is rectangular as in Fig. 1.

Here the pane element 1 is depicted as a traditional thermos pane, but it might as well have been a vacuum pane. This also applies to the following embodiments.

In the embodiment in Fig. 2, the border element 2 engages both the interior side 14, the exterior side 15 and the outer side 16 of the pane element 1, thus surrounding the edge of the pane element, but as will be explained later, this need not be case in all embodiments. When moulding the border element, the soft moulding material adheres to the pane element so that the border element becomes attached to the pane element, and the adhesion to one surface of the pane element may be sufficient to achieve a reliable fixation of the pane element to the border element.

The pane module further comprises a thermal insulating element 5, which is encased in the border element 2 and extends along the outer side 16 of the pane element.

The stiffening and connector element 3 is here a rail member with an angular cross-sectional shape, where a first leg 31 extends along the interior side 14 of the pane element and a second leg 32 extends in a direction substantially perpendicular to the interior sheet element 11. The first leg 31 supports the pane element and provides strength and stiffness to the border element. The second leg 32 connects the pane module to a frame member 4, which in this embodiment forms part of a window sash, but it is also possible to connect the pane module to a stationary frame or like fixed construction. The stiffening and connector element 3 may have multiple substantially parallel first legs 31 and may also sandwich the pane element 1 and the insulating element 5 between the substantially parallel legs (not shown).

In the embodiment in Fig. 2 the insulating element 5 is arranged on the exterior side 15 of the pane element 1 so that it covers a part of the pane area, and has a trapezoidal shape so that its height decreases as the distance to the outer side 16 of the pane element increases. The distance d between the outer side 16 of the pane element 1 and the inner-most point 51 on the insulating element is chosen in a balanced consideration of the desired insulating properties and the need for maintaining a certain light admitting area. The distance d should, however, be equal to or larger than the width of the spacer member 13 so that the insulating element 5 covers the spacer member 13 and a reduction of the stress at the edge of the pane element is achieved. Also, a mask may be provided on at least one side of the pane element. In one example the exterior side 15 has a mask substantially covering the distance d.

The insulating element 5 may be provided with an adhesive (not shown) on its interior side 52 in order to keep it in place during the moulding of the border element 2, or otherwise attached to the pane element 1 prior to the moulding of the border element. Alternatively, the border element 2 may be made prior to the application of the insulating member 5. The border element is then formed with a hollow having the desired shape of the insulating element, and the hollow is subsequently filled with an insulating material, which may be in a liquid, powdered or particulate form. It is also possible to make the border element 2 and the insulating member 5 simultaneously, for example by extrusion or printing.

In this embodiment the border element 2 follows the shape of the insulating element 5 so that its inner side 21 extends at a non-perpendicular angle α to the exterior side 15 of the pane element. This angle may both serve to provide the pane module with a desired aesthetic appearance and prevent water and dirt from collecting at the joint between the border element 2 and the pane element 1.

On the exterior side 22, the border element 2 is provided with two feathers 23, which are intended to keep water and wind from penetrating into the construction in which the pane module is mounted. The two feathers may serve as a drainage gutter extending along the sides of a roof window.

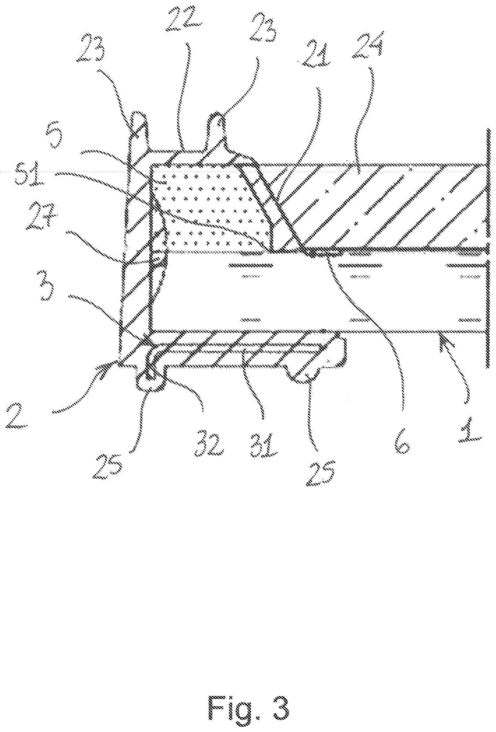

Fig. 3 shows a different embodiment of a pane module in a cross-section corresponding to that in Fig. 2 but showing also the top member 24 of the border element 2 and displaying the pane element 1 in a simplified form as a single unit.

In Fig. 3 as well as in the following figures the same reference numbers as in Fig. 2 have been used and unless otherwise stated features having the same reference numbers have substantially the same properties and functions.

As will be seen the feathers 23 on the exterior side of the border element 2 are positioned differently than in Fig. 2 but serve the same purpose, and the thickness of the border element varies more than in Fig. 2 in order to provide the border element material where it is most needed. The outer dimensions of the border element 2 are defined by the inner shape of the mould used when forming the border element and are thus in principle independent of the shape of the pane element 1, insulating element 5 and other items embedded therein.

The embodiment in Fig. 3 further differs from that in Fig. 2 in that the stiffening and connector element 3 does not project through the interior side of the border element 2 and here primarily serves as a stiffening element. Instead the inner side of the border element 2 is provided with two beads 25, which are intended to mate with depressions (not shown) in a frame or the like to which the pane module is to be connected. The second leg 32 of the stiffening and connector element 3 is here short and extends into one of the beads 25, thereby reinforcing it.

The pane module in Fig. 3 is further provided with a sealing gasket 6 provided at the joint between the border element 2 and the pane element 1. If providing the insulating element 5 before moulding the border element, the sealing gasket 6 may be provided on the insulating element 5 in a position so that it is compressed between the pane element 1 and the border element 2 under the influence of the moulding pressure, or it may be provided on the pane element before moulding the border element. It is also possible to provide a similar sealing in the form of a soft joint sealant. It will be understood that the use of a sealing gasket is in principle independent of the shape of the border element, the presence of a stiffening and connector element, etc.

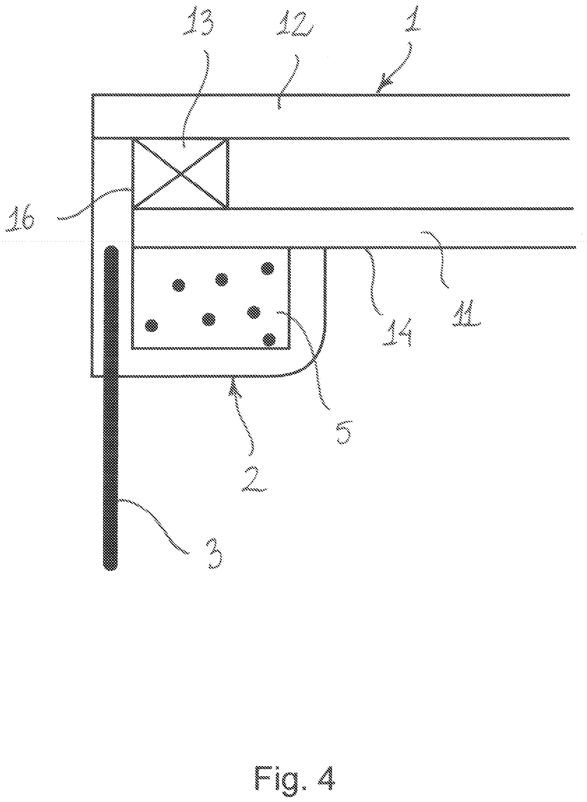

A still further embodiment of the pane module is shown in Fig. 4. Here the insulating element 5 is provided on the interior side of the pane element 1, and the stiffening and connector element 3 is of a simple, plate shaped design.

The pane element in Fig. 4 differs from that shown in the other figures in that the exterior sheet element 12 is larger than the interior sheet element 11 and projecting outwards from the spacer member 13. The larger exterior sheet element 12 projects over the border element 2, which thus only extends along the interior and outer sides 14, 16 of the pane element 1, thereby protecting the joint between the border element and the pane element. Though here shown at the side edge of the pane module, it will be understood that this embodiment is particularly well suited for use at the bottom of a roof or facade window, and it is to be understood that the exterior sheet element does not have to project at all edges.

In an alternative embodiment (not shown), the interior sheet 11 element is larger than the exterior sheet 12 element. The stiffening and connector element 3 may then grasp the larger interior sheet 11 edge which extends and forms a ledge. Again, this may be on all four sides of the pane element or only on some of them.

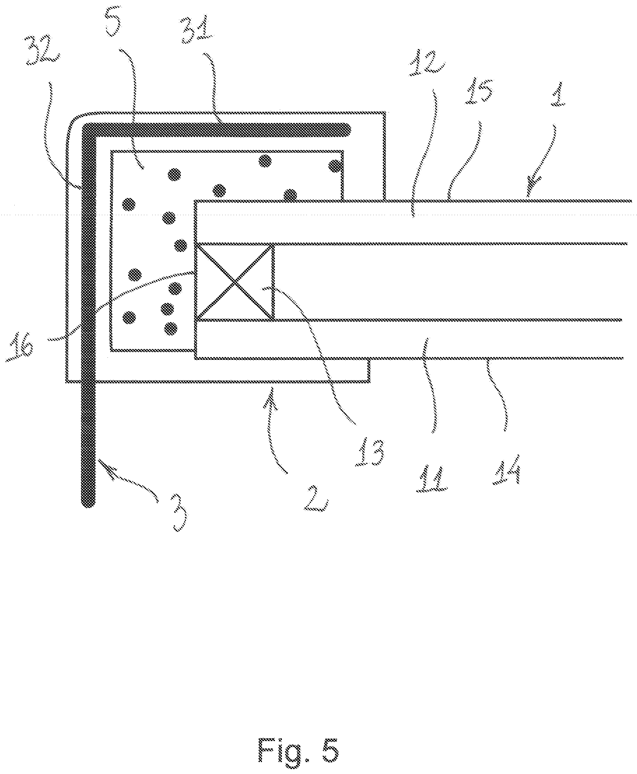

Turning now to Fig. 5 a further embodiment of the pane module is shown. Here the insulating element 5 not only covers part of the exterior side 15 of the pane element 1 as in Figs 2 and 3, but also extends down along the outer side 16 of the pane element for further improved insulation. Moreover, the first leg 31 of the stiffening and connector element 3 is here extending on the exterior side of the insulating element 5 and the pane element 1 in order to provide further reinforcement of the border element 2. If choosing this design of the stiffening and connector element 3 care should be taken that it does not unintentionally form a thermal bridge, which has negative influences on the insulating properties.

Generally, the stiffening and connector element 3 may have a perforated portion. Hereby the thermal bridge effect is reduced, and the moulding process can efficiently encase at least a part of the stiffening and connector element 3 in the material of the border element.

The stiffening and connector element 3 may for example be a metal profile or a plastic profile or fibre reinforced plastic profile, have a hollow cross section profile, and/or extend along all four sides of the pane element.

Generally, the stiffening and connector element 3 may be designed to hold or position the insulating element 5 in the mould for the encasing process.

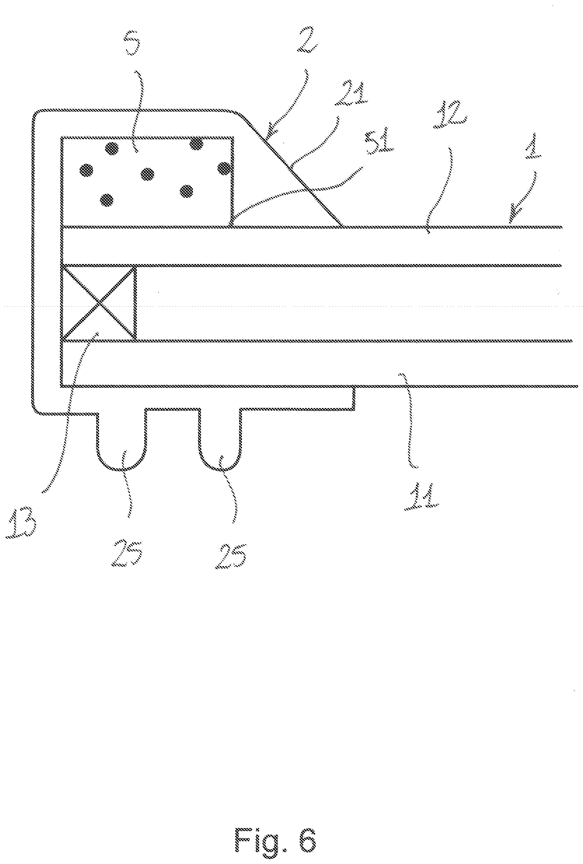

A still further embodiment of the pane module is shown in Fig. 6. Here there is no stiffening and connector element, and the insulating element 5 is of a simple rectangular design, but the inclined inner side 21 of the border element 2 described with reference to Fig. 2 is maintained.

For a rectangular pane module it will often be preferable to use four insulating members each extending along one edge of the pane element 1, but for use in a centre-hung window is may be considered advantageous to have a section without thermal insulation at the position of the hinges (not shown) in order to provide a stiffer section better able to transmit loads to the hinges. The stiffening and connector element 3, if any, may also be embodied differently in the vicinity of hinges or other elements attached to the pane module. The stiffening and connector element 3 may also be directly connected to the hinges.

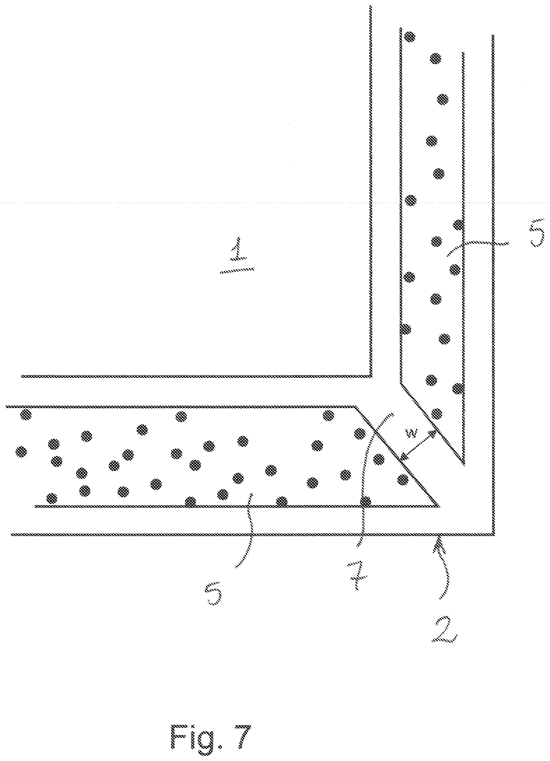

The several separate insulating members used for the insulating element 5 may be arranged at a distance from each other in order to provide a flow passage for the moulding material used for the border element 2. One such embodiment is shown in Fig. 7, where the width w of the flow passage 7 is exaggerated for illustration purposes. It will normally suffice if the width of the flow passage is approximately 10 mm, but the exact dimensions will depend on the moulding material used, the size of the pane, the number of passages etc. Flow passages may also be provided as holes (not shown) extending through the insulating element(s) 5 or grooves (not shown) in the interior or exterior side of the insulating element 5. Seen from a moulding perspective it will generally be advantageous to have flow passages at the corners of a rectangular pane module, but other considerations may require a different design. As an example, it may be considered expedient or even necessary from an insulation perspective to have uninterrupted sections of insulating material at the corners.

It is to be understood that the different embodiments of the stiffening and connector element 3, the insulating element 5, the border element 2, and the pane element 1 described with reference to the embodiments shown in the drawing may be combined in different ways without departing from the scope of the claim. As an example, the stiffening and connector element 3 in Fig. 2 may be combined with the insulating element 5 in Fig. 5, or the beads 25 and feathers 23 from Fig. 3 may be provided on the Fig. 4 embodiment.

## Claims

1. A pane module configured to be installed on a window frame and comprising a pane element (1) and a border element (2),
where the pane element (1) includes at least two sheet elements (11, 12), such as sheets of glass, separated by one or more spacer members (13),
where the pane element (1) has an exterior side (15) intended to face the exterior of a building in a mounted state, an interior side (14) intended to face the interior of a building in a mounted state, and outer sides (16) extending between the exterior side (15) and the interior side (14) and delimiting a pane area,
where the border element (2) surrounds the pane element (1), extending along at least some of its outer sides (16), and
a thermal insulating element (5) is encased in the border element (2) and extends along edges of the pane element (1) in the vicinity of at least some of the outer sides (16) of the pane element (1), and that the insulating element (5) is arranged to cover a part of the interior (14) and/or exterior side (15) of the pane element (1) and extends to a distance d from the outer side (16), said distance d being so that the insulating element (5) at least covers the spacer member (13) when seen perpendicular to the interior (14) and/or exterior side (15) of the pane element (1),
**characterized in that**
the border element (2) is made by moulding and is attached to the pane element (1) during the moulding process, and
that the thermal insulating element (5) includes separate thermal insulating members.

2. A pane module according to claim 1, where the thermal insulating element (5) is in direct contact with the pane element (1).

3. A pane module according to claim 1 or 2, where the thermal insulating element (5) extends along all outer sides (16) of the pane element (1).

4. A pane module according to one or more of the preceding claims, where the separate thermal insulating members are arranged with one thermal insulating member at each side of the pane element (1).

5. A pane module according to one or more of the preceding claims, where the thermal insulating members are arranged at a distance from each other when seen in parallel to the exterior side (15) of the pane, said distance preferably being at least 2 mm, and/or that the thermal insulating element (5) is provided with one or more passages allowing material used for moulding the border element (2) to pass through them.

6. A pane module according to one or more of the preceding claims, where the thermal insulating element (5) is arranged at the exterior side (15) of the pane element (1) so that it covers a part of the pane area.

7. A pane module according to one or more of the preceding claims, where the border element (2) contacts at least two of the interior side (14) of the pane element (1), the exterior side (15) of the pane element (1), and an outer side (16) of the pane element (1).

8. A pane module according to one or more of the preceding claims, where an inner side (21) of the border element (2) extends at a non-perpendicular angle α to the exterior side (15) of the pane element (1).

9. A pane module according to one or more of the preceding claims, further comprising one or more stiffening and/or connector elements (3), which is/are embedded in the moulded border element (2).

10. A pane module according to one or more of the preceding claims, wherein the pane element (1) is a vacuum insulated glass unit with an evacuated cavity and comprising an array of pillars between the sheet elements (11, 12), and preferably wherein a side seal of the vacuum insulated glass unit comprises rigid solder.

11. A window frame with a pane module according to one or more of the preceding claims and with hinges for suspending the pane element (1) in an openable manner either by the border element (2) being connected to the hinges or by the pane element (1) being connected to the hinges through an intermediate sash.

12. A method for making a pane module adapted to be installed on a window frame and comprising a pane element (1) and a border element (2), where the pane element (1) includes at least two sheet elements (11, 12), such as sheets of glass, separated by one or more spacer members (13), and where the pane element (1) has an exterior (15) intended to face the exterior of a building in a mounted state, an interior side (14) intended to face the interior of a building in a mounted state, and outer sides (16) extending between the exterior side (15) and the interior side (14) and delimiting a pane area, said method including the following steps:
A) arranging separate thermal insulating members of a thermal insulating element (5) so that the thermal insulating element extends along outer sides (16) of the pane element (1) and covers a part of the interior (14) and/or exterior side (15) of the pane element (1) and extends to a distance d from the outer side, said distance d being so that the insulating element (5) at least covers the spacer member (13) when seen perpendicular to the interior (14) and/or exterior side (15) of the pane element (1),
B) moulding the border element (2) onto the pane element (1) so that it surrounds the pane element (1), extending along at least some of its outer sides (16), and so that it encases the thermal insulating element (5).

## Patentansprüche

1. Scheibenmodul, das zur Installation an einem Fensterrahmen ausgelegt ist und ein Scheibenelement (1) und ein Randelement (2) umfasst,
wobei das Scheibenelement (1) mindestens zwei Plattenelemente (11, 12), zum Beispiel Glasplatten, umfasst, die durch ein oder mehrere Abstandhalterteile (13) getrennt sind,
wobei das Scheibenelement (1) eine Außenseite (15), die dazu bestimmt ist, dem Äußeren eines Gebäudes im montierten Zustand zugewandt zu sein, eine Innenseite (14), die dazu bestimmt ist, dem Inneren eines Gebäudes im montierten Zustand zugewandt zu sein, und äußere Seiten (16), die sich zwischen der Außenseite (15) und der Innenseite (14) erstrecken und einen Scheibenbereich begrenzen, aufweist,
wobei das Randelement (2) das Scheibenelement (1) umgibt und sich entlang zumindest einiger dessen äußeren Seiten (16) erstreckt, und
ein Wärmeisolierungselement (5), das in dem Randelement (2) eingeschlossen ist und sich entlang der Kanten des Scheibenelements (1) in der Nähe zumindest einiger äußerer Seiten (16) des Scheibenelements (1) erstreckt, und dadurch, dass das Isolierelement (5) dazu angeordnet ist, einen Teil der Innen- (14) und/oder Außenseite (15) des Scheibenelements (1) zu bedecken, und sich bis zu einer Entfernung d von der äußeren Seite (16) erstreckt, wobei die Entfernung d derart gewählt ist, dass das Isolierungselement (5), wenn senkrecht zur Innen- (14) und/oder Außenseite (15) des Scheibenelements (1) betrachtet, zumindest das Abstandhalterteil (13) bedeckt,
**dadurch gekennzeichnet, dass**
das Randelement (2) durch Formen gefertigt ist und während des Formungsvorgangs am Scheibenelement (1) befestigt wird und
dass das Wärmeisolierungselement (5) einzelne Wärmeisolierungsteile umfasst.

2. Scheibenmodul nach Anspruch 1, wobei das Wärmeisolierungselement (5) in direktem Kontakt mit dem Scheibenelement (1) steht.

3. Scheibenmodul nach Anspruch 1 oder 2, wobei sich das Wärmeisolierungselement (5) entlang aller äußeren Seiten (16) des Scheibenelements (1) erstreckt.

4. Scheibenmodul nach einem oder mehreren der vorstehenden Ansprüche, wobei die einzelnen Wärmeisolierungsteile mit einem Wärmeisolierungsteil auf jeder Seite des Scheibenelements (1) angeordnet sind.

5. Scheibenmodul nach einem oder mehreren der vorstehenden Ansprüche, wobei die Wärmeisolierungselemente, wenn parallel zur Außenseite (15) der Scheibe betrachtet, in einer Entfernung zueinander angeordnet sind, wobei die Entfernung vorzugsweise mindestens 2 mm beträgt, und/oder dass das Wärmeisolierungselement (5) mit einem oder mehreren Durchgängen versehen ist, die zum Formen des Randelements (2) verwendetes Material dort hindurch passieren lassen.

6. Scheibenmodul nach einem oder mehreren der vorstehenden Ansprüche, wobei das Wärmeisolierungselement (5) an der Außenseite (15) des Scheibenelements (1) angeordnet ist, sodass es einen Teil des Scheibenbereichs bedeckt.

7. Scheibenmodul nach einem oder mehreren der vorstehenden Ansprüche, wobei das Randelement (2) mindestens zwei der Innenseite (14) des Scheibenelements (1), der Außenseite (15) des Scheibenelements (1) und der äußeren Seite (16) des Scheibenelements (1) berührt.

8. Scheibenmodul nach einem oder mehreren der vorstehenden Ansprüche, wobei sich eine innere Seite (21) des Randelements (2) in einem nicht rechtwinkligen Winkel α zur Außenseite (15) des Scheibenelements (1) erstreckt.

9. Scheibenmodul nach einem oder mehreren der vorstehenden Ansprüche, ferner umfassend ein oder mehrere Versteifungs- und/oder Verbindungselemente (3), das/die in das geformte Randelement (2) eingebettet ist/sind.

10. Scheibenmodul nach einem oder mehreren der vorstehenden Ansprüche, wobei das Scheibenelement (1) eine Vakuumisolierglaseinheit mit einem entlüfteten Hohlraum ist und eine Anordnung von Säulen zwischen den Plattenelementen (11, 12) umfasst und vorzugsweise wobei eine Seitendichtung der Vakuumisolierglaseinheit ein starres Lötmittel umfasst.

11. Fensterrahmen mit einem Scheibenmodul nach einem oder mehreren der vorstehenden Ansprüche und mit Scharnieren zum Aufhängen des Scheibenelements (1) auf öffenbare Weise entweder am mit den Scharnieren verbundenen Randelement (2) oder am durch einen Zwischenflügel mit den Scharnieren verbundenen Scheibenelement (1).

12. Verfahren zur Herstellung eines Scheibenmoduls, das dazu eingerichtet ist, an einem Fensterrahmen installiert zu werden, und umfassend ein Scheibenelement (1) und ein Randelement (2), wobei das Scheibenelement (1) mindestens zwei Plattenelemente (11, 12), zum Beispiel Glasplatten, umfasst, die durch ein oder mehrere Abstandhalterteile (13) voneinander getrennt sind, und wobei das Scheibenelement (1) eine Außenseite (15), die dazu bestimmt ist, dem Äußeren eines Gebäudes im montierten Zustand zugewandt zu sein, eine Innenseite (14), die dazu bestimmt ist, dem Inneren eines Gebäudes im montierten Zustand zugewandt zu sein, und äußere Seiten (16), die sich zwischen der Außenseite (15) und der Innenseite (14) erstrecken und einen Scheibenbereich begrenzen, aufweist, wobei das Verfahren die folgenden Schritte umfasst:
A) Anordnen von einzelnen Wärmeisolierungsteilen eines Wärmeisolierungselements (5), sodass sich das Wärmeisolierungselement entlang der äußeren Seiten (16) des Scheibenelements (1) erstreckt und einen Teil der Innen- (14) und/oder Außenseite (15) des Scheibenelements (1) bedeckt und sich bis zu einer Entfernung d von der äußeren Seite erstreckt, wobei die Entfernung d derart gewählt ist, dass das Isolierelement (5), wenn senkrecht zur Innen- (14) und/oder Außenseite (15) des Scheibenelements (1) betrachtet, zumindest das Abstandhalterteil (13) bedeckt,
B) Formen des Randelements (2) auf das Scheibenelement (1), sodass es das Scheibenelement (1) umgibt und sich entlang zumindest einiger dessen äußerer Seiten (16) erstreckt, und sodass es das Wärmeisolierungselement (5) einschließt.

## Revendications

1. Module de vitre configuré pour être installé sur un cadre de fenêtre et comprenant un élément vitre (1) et un élément bordure (2),
où l'élément vitre (1) inclut au moins deux éléments feuilles (11, 12), tels que des feuilles de verre, séparés par un ou plusieurs organes entretoises (13),
où l'élément vitre (1) a un côté extérieur (15) prévu pour faire face à l'extérieur d'un bâtiment dans un état monté, un côté intérieur (14) prévu pour faire face à l'intérieur d'un bâtiment dans un état monté, et des côtés externes (16) s'étendant entre le côté extérieur (15) et le côté intérieur (14) et délimitant une surface de vitre,
où l'élément bordure (2) entoure l'élément vitre (1), s'étendant le long d'au moins certains de ses côtés externes (16), et
un élément thermo-isolant (5) est enfermé dans l'élément bordure (2) et s'étend le long de bords de l'élément vitre (1) dans le voisinage d'au moins certains des côtés externes (16) de l'élément vitre (1), et l'élément isolant (5) est agencé pour couvrir une partie du côté intérieur (14) et/ou extérieur (15) de l'élément vitre (1) et s'étend jusqu'à une distance d depuis le côté externe (16), ladite distance d étant pour que l'élément isolant (5) couvre au moins l'organe entretoise (13) en vue perpendiculaire au côté intérieur (14) et/ou extérieur (15) de l'élément vitre (1),
**caractérisé en ce que**
l'élément bordure (2) est fait par moulage et est attaché à l'élément vitre (1) durant le processus de moulage, et
que l'élément thermo-isolant (5) inclut des organes thermo-isolants séparés.

2. Module de vitre selon la revendication 1, où l'élément thermo-isolant (5) est en contact direct avec l'élément vitre (1).

3. Module de vitre selon la revendication 1 ou 2, où l'élément thermo-isolant (5) s'étend le long de tous les côtés externes (16) de l'élément vitre (1).

4. Module de vitre selon une ou plusieurs de revendications précédentes, où les organes thermo-isolants séparés sont agencés avec un organe thermo-isolant sur chaque côté de l'élément vitre (1).

5. Module de vitre selon une ou plusieurs de revendications précédentes, où les organes thermo-isolants sont agencés à une distance les uns des autres en vue en parallèle au côté extérieur (15) de la vitre, ladite distance étant de préférence au moins 2 mm, et/ou l'élément thermo-isolant (5) est pourvu d'un ou de plusieurs passages permettant à un matériau utilisé pour mouler l'élément bordure (2) de passer à travers ceux-ci .

6. Module de vitre selon une ou plusieurs de revendications précédentes, où l'élément thermo-isolant (5) est agencé sur le côté extérieur (15) de l'élément vitre (1) pour qu'il couvre une partie de la surface de vitre.

7. Module de vitre selon une ou plusieurs de revendications précédentes, où l'élément bordure (2) entre en contact avec au moins deux du côté intérieur (14) de l'élément vitre (1), du côté extérieur (15) de l'élément vitre (1), et d'un côté externe (16) de l'élément vitre (1).

8. Module de vitre selon une ou plusieurs de revendications précédentes, où un côté interne (21) de l'élément bordure (2) s'étend à un angle non perpendiculaire α par rapport au côté extérieur (15) de l'élément vitre (1).

9. Module de vitre selon une ou plusieurs de revendications précédentes, comprenant en outre un ou plusieurs éléments de renforcement et/ou de raccordement (3), qui est/sont encastrés dans l'élément bordure moulé (2).

10. Module de vitre selon une ou plusieurs de revendications précédentes, dans lequel l'élément vitre (1) est une unité de verre isolée sous vide avec une cavité sous vide et comprenant un réseau de piliers entre les éléments feuilles (11, 12), et de préférence dans lequel un joint d'étanchéité latéral de l'unité de verre isolée sous vide comprend une brasure rigide.

11. Cadre de fenêtre avec un module de vitre selon une ou plusieurs de revendications précédentes et avec des charnières pour suspendre l'élément vitre (1) de manière ouvrable soit grâce au fait que l'élément bordure (2) est relié aux charnières soit grâce au fait que l'élément vitre (1) est relié aux charnières par le biais d'un châssis intermédiaire.

12. Procédé pour fabriquer un module de vitre adapté pour être installé sur un cadre de fenêtre et comprenant un élément vitre (1) et un élément bordure (2), où l'élément vitre (1) inclut au moins deux éléments feuilles (11, 12), tels que des feuilles de verre, séparés par un ou plusieurs organes entretoises (13), et où l'élément vitre (1) a un côté extérieur (15) prévu pour faire face à l'extérieur d'un bâtiment dans un état monté, un côté intérieur (14) prévu pour faire face à l'intérieur d'un bâtiment dans un état monté, et des côtés externes (16) s'étendant entre le côté extérieur (15) et le côté intérieur (14) et délimitant une surface de vitre, ledit procédé incluant les étapes suivantes :
A) l'agencement d'organes thermo-isolants séparés d'un élément thermo-isolant (5) pour que l'élément thermo-isolant s'étende le long de côtés externes (16) de l'élément vitre (1) et couvre une partie du côté intérieur (14) et/ou extérieur (15) de l'élément vitre (1) et s'étende jusqu'à une distance d depuis le côté externe, ladite distance d étant pour que l'élément isolant (5) couvre au moins l'organe entretoise (13) en vue perpendiculaire au côté intérieur (14) et/ou extérieur (15) de l'élément vitre (1),
B) le moulage de l'élément bordure (2) sur l'élément vitre (1) pour qu'il entoure l'élément vitre (1), s'étendant le long d'au moins certains de ses côtés externes (16), et pour qu'il enferme l'élément thermo-isolant (5).
